(19) Europäisches Patentamt

European Patent Office

Office européen des brevets

(11) **EP 4 607 408 A1**

(12) **EUROPEAN PATENT APPLICATION**

(43) Date of publication:
**27.08.2025   Bulletin 2025/35**

(51) International Patent Classification (IPC):
**G06N 3/042** (2023.01)    **G06N 3/0464** (2023.01)
**G06N 3/0475** (2023.01)

(21) Application number: **24159578.4**

(22) Date of filing: **26.02.2024**

(52) Cooperative Patent Classification (CPC):
**G06N 3/045; G06N 3/042; G06N 3/0464;
G06N 3/0475; G06N 3/084;** G06N 3/047

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Robert Bosch GmbH
70442 Stuttgart (DE)**

(72) Inventors:
• **Berman, Nimrod
  Tel-Aviv (IL)**
• **Di Castro, Dotan
  3440619 Haifa (IL)**
• **Kosman, Eitan
  38830 Haifa (IL)**

(54)    **USING DIFFUSION MODEL TO GENERATE GRAPH DATA**

(57)    Methods are provided for training and using a machine learning diffusion model to generate graph data based on samples from a data distribution as input. The diffusion model comprises one or more diffusion layers, and the graph data comprises node attributes and edge attributes. The training method comprises a diffusion process, comprising a forward- and a reverse-time pass, to learn parameters of the diffusion layers, and a joint diffusion process, comprising solving a forward- and a reverse-time stochastic differential equation. Both equations are based on both the node and edge attributes, the reverse-time equation being additionally based on the learnt parameters of the diffusion layers. Both equations are solved for both for the node and the edge attributes simultaneously. The trained diffusion model is provided for use, in which use method the trained diffusion model repeatedly performs the reverse-time pass to obtain graph data based on input samples.

Fig. 2

**Description**

**Field of the invention**

The presently disclosed subject matter relates to a computer-implemented method for training a machine learning diffusion model to generate graph data. The presently disclosed subject matter further relates to a computer-implemented method for using a trained diffusion model to generate graph data. The presently disclosed subject matter further relates to a transitory or non-transitory computer-readable medium comprising data representing a computer program, the computer program comprising instructions for causing a processor system to perform one of the methods, and to a processor system comprising a memory and one or more processors, wherein the memory comprises instructions for causing the one or more processors to perform one of the methods.

**Background of the invention**

Diffusion models are a type of generative machine learning models which are aimed at learning a diffusion process. The diffusion process generates a probability distribution of a given dataset.

Diffusion models are widely used in computer vision, particularly in image generation (such as the DALL-E series by OpenAI and Stable Diffusion by Stability AI), as well as in natural language processing, particularly in text generation and text summarization. Diffusion models may also be used for generating training data for machine learning models. Interestingly, diffusion models may be used to generate data for training a machine learning model for edge cases. This is especially valuable, as edge cases seldomly occur in daily practice, and generating such training in real life may generally be dangerous. For example, when using machine learning models in self-driving vehicles, edge cases may represent collisions or near-collisions of such vehicles with other, self-driving or non-self-driving, vehicles, cyclists, and/or pedestrians. By sampling from a target distribution, samples may be obtained which represent such edge cases according to the target distribution. By feeding these samples as input into the diffusion model, data may be obtained which may be used as training data for a machine learning model.

Generating graphs has received a growing interest over the recent years in numerous engineering and scientific domains. Graphs may be used to model various entities and phenomena, and there is a need for generating graphs in an increasing number of applications and scientific tasks. Returning to the example of self-driving vehicles, traffic scenes may be generated employing graph data, comprising node attributes and edge attributes. Node attributes may denote spatial coordinates of the vehicle and other traffic participants, and edge attributes may indicate categories such as type of traffic participants (pedestrians, cyclists, vehicles), vulnerability, distance and/or orientation relative to the self-driving vehicle.

Furthermore, graphs may also be used to model, e.g., molecules (with node attributing atoms and edge attributes denoting bonds), relations on databases (with node attributes denoting the information as data entries and edge attributes denoting relation orderings), and prediction and decision processes (with node attributes denoting, e.g., cells on a grid, and edge attributes denoting, e.g. probabilities of moving between the grid cells).

It is known to generate graphs with diffusion models. Diffusion models are able to generate graph data because of their structure. For example, the diffusion models GDSS, proposed in *Score-based generative modeling of graphs via the system* of *stochastic differential equations* by Jo et al., which can be retrieved from https://arxiv.org/abs/2202.02514, and SwinGNN, proposed in *SwinGNN: Rethinking permutation invariance in diffusion models for graph generation* by Yan et al., which can be retrieved from https://arxiv.org/abs/2307.01646, are both model based on graph neural networks (GNNs).

**Summary of the Invention**

A disadvantage of the existing graph diffusion models is that they do not accurately model the interdependence of node attributes and edge attributes in the graph data.

In accordance with a first aspect of the invention, as defined by claim 1, a method is provided for training a machine learning diffusion model to generate graph data. In accordance with a further aspect of the invention, as claimed by claim 8, a method is provided for using a trained diffusion model to generate graph data. In accordance with a further aspect of the invention, a computer-readable medium is provided as defined by claim 14. In accordance with a further aspect of the invention, a processor system is provided as defined by claim 15.

The above measures may involve training a machine learning diffusion model to generate graph data based on samples from a data distribution as input, wherein the diffusion model comprises one or more diffusion layers and the graph data comprises node attributes and edge attributes.

Diffusion models form a class of generative models which sample new data by iteratively denoising a pre-defined distribution as expanded upon in *Deep unsupervised learning using nonequilibrium thermodynamics* by Sohl-Dickstein et al., which can be retrieved from https://arxiv.org/abs/1503.03585, *Generative modeling by estimating gradients of the data distribution* by Song and Ermon, which can be retrieved from https://arxiv.org/abs/1907.05600, and *Denoising diffusion probabilistic models* by Ho et al., which can be retrieved from https://arxiv.org/abs/2006.11239. Diffusion models may comprise one or more diffusion layers, and may be aimed at learning a diffusion process. A diffusion process is aimed at generating a probability distribution of a given dataset. In the case the data in the data distribution is graph data, the probability distribution may be a graph distribution. Diffusion models may sample new data, by iteratively denoising a pre-defined distribution. The new data is thereby added to the probability distribution which is outputted by the diffusion model.

The diffusion model may be trained to generate graph data. A graph may comprise adjacency information. The adjacency information may specify the connectivity of the graph. The adjacency may be accompanied by assigned features. The assigned features may comprise nodes and edge attributes. The graph data may thereby comprise the node attributes and the edge attributes. In some examples, the node attributes may, for example, comprise one or more of spatial coordinates, and/or the edge attributes may, for example, comprise one or more of spatial distances. This may, for example, model a representation in which relative distances may be important: for example, a physical scene, such as a traffic scene which, for example, a self-driving vehicle may encounter. In some examples, the node attributes may, for example, comprise nodes on a grid, and the edge attributes may, for example, comprise probabilities of moving between the nodes on the grid. The graph data comprising the node attributes and the edge attributes may represent, for example, a Markovian decision process. In generating graph data, graph distributions may be modelled. The modelling of graph distributions may be seen as equivalent to encoding the node, edge, adjacency information and their mutual interaction.

The above measures may further involve using the diffusion process to learn parameters of the one or more diffusion layers. The diffusion process may comprise a forward-time pass and a reverse-time pass. The forward-time pass may comprise noise-perturbing the data distribution. Noise, for example Gaussian noise, may be gradually added to the samples from the data distribution as input. The data distribution as input may converge to a distribution, for example a normal Gaussian distribution. The reverse-time pass may comprise denoising samples from a noise-perturbed data distribution.

The above measures may further involve performing the diffusion process by performing a joint diffusion process. Performing the joint diffusion process may comprise solving a forward-time stochastic differential equation and a reverse-time stochastic differential equation. The forward-time stochastic differential equation and the reverse-time stochastic differential equation may each be based on both the node attributes and the edge attributes. The reverse-time stochastic differential equation may additionally be based on the learnt parameters of the one or more diffusion layers. The forward-time stochastic differential equation and the reverse-time stochastic differential equation may be solved for both the node attributes and the edge attributes simultaneously. The reverse-time stochastic differential equation may be integrated in the solving process. In the joint diffusion process, both the node attributes and the edge attributes may be mutually dependent in the forward-time stochastic differential equation and reverse-time stochastic differential equation and so mutually dependent in the joint solving process, as the solving for both the node attributes and the edge attributes may be done simultaneously. The forward-time stochastic differential equation and reverse-time stochastic differential equation may describe the evolution of the node attributes and the edge attributes. In the joint solving, the model may benefit from the synergetic connections between the node attributes and the edge attributes due to the mutual dependence. The above measures may further involve providing the trained diffusion model for use. New graphs may be sampled.

The above measures are at least in part based on the insight that the node attributes and edge attributes may generally be mutually dependent, and that in order to properly model graph distributions, the node, edge, adjacency information as *well* as *their mutual interaction* would need to be encoded. The interaction between the node attributes and the edge attributes may be of importance to be modelled, and therefore be implemented in the modelling procedure. This interaction may be significant. The level of this significance may differ by the level of connectivity of a graph, and therefore the level of significance may differ per graph type. However, this level of significance may be difficult to predict upfront. Thereby, it may be valuable to always model the interaction between the node attributes and the edge attributes. Existing diffusion models for generating graphs, such as GDSS and SwinGNN, however, define separate diffusion processes for the different graph elements in the adjacency information, the node attributes and/or the edge attributes. Due to this separate treatment, interaction between the sampled graph components may be limited, as there may be an loss on neighbourhood information: nodes may be less affected by their adjacent nodes than they should be accurately treated during the training and inference of the model by the absence of the edge attributes encoding this neighbourhood information, and vice versa. So, the mutual dependence between the different attributes is missing, and the resulting existing models may suffer from a general lack of information and therefore accuracy, especially in the case of highly interdependent graph data. This renders them difficult for general deployment in a real-world setting.

In an embodiment, in the diffusion model, which may be aimed at generating graph data according to a graph data distribution, the reverse-time stochastic differential equation may comprise a score term representing a score of the diffusion process. The score of the diffusion process may comprise the gradient of the log-likelihood of the corresponding probability density of the diffusion process. A reverse-time stochastic differential equation may represent the reverse part of the joint diffusion process. Integrating the reverse-time stochastic differential equation may allow to effectively sample new data points from the initial graph data distribution.

In an embodiment, the training method may further comprise using a score-approximation model. The score-approximation model may be a neural network, such as a graph neural network. The score-approximation model may be a denoising neural network. The score-approximation model may be trained on the parameters of the one or more diffusion layers. As estimating the score term in the reverse-time stochastic differential equation may be non-trivial at nearly all time instances of the diffusion process, the score-approximation model may be trained to obtain an approximated score of the diffusion process.

In an embodiment, the training method may further comprise feeding samples from an initial data distribution as input into the diffusion model. The training method may further comprise training the score-approximation model to minimize an expectation value with respect to a score of a conditional probability distribution of the diffusion process which is conditional on the initial data distribution. The output of the score-approximation model, may minimize the expectation value. The training method may further comprise using the approximated score of the diffusion process as the score term in the reverse-time stochastic differential equation.

In an embodiment, the score-approximation model may be configured to receive graph data as input. The training method may further comprise iteratively performing the diffusion process, thereby obtaining intermediate estimates of graph data. The intermediate estimates of graph data may comprise intermediate estimates of node attributes and edge attributes. The method may further comprise providing the intermediate estimates of graph data as input to the score-approximation model. The score-approximation model may comprise one or more convolution layers. The one or more convolution layers may comprise graph convolution network layers, or GCN layers, which may be as explained below. The score-approximation model may transform the intermediate estimates of graph data across the one or more convolution layers.

The transforming of the intermediate estimates of graph data may comprise matrix and/or tensor multiplications. The matrix and/or tensor multiplications may combine both the intermediate estimates of node attributes and the intermediate estimates of edge attributes. The matrix and/or tensor multiplications may further comprise additional graph data as factors, such as model weights and/or additional adjacency information and/or degree information. The score-approximation model may for example comprise one or more Graph Neural Module (GNM) layers. In the GNM layers, node, edge, and adjacency information may be combined together in the following way in tensor multiplication form in transforming the intermediate estimates of graph data.

Furthermore, the graph neural network may comprise a multilayer perceptron (MLP) network. In order to estimate the score for the node attributes, a feedforward net may be used. Given initial node and edge attributes, the model may iteratively transform their inputs across the GCN layers. Thereby, the score for the node attributes may be approximated. The score-approximation model may further comprise a graph multihead (GMH) module. The GMH may comprise one or more layers for transforming the intermediate estimates of graph data across the one or more layers. The transforming of the intermediate estimates of graph data across the layers may take place in the following manner. The layers of the GMH module may comprise attention (ATTN) modules. In the ATTN modules, node, edge, and adjacency information may be combined together in the following way, capturing the interaction between the different graph elements and thereby affecting all other computations in the score-approximation model. Given an intermediate estimate of node and edge attributes, the ATTN module may be defined in functional form comprising outputs of a graph neural module relative to a query and a key as parameters defining weights. For more information on the attention parameters, the reader may be referred to *Accurate learning of graph representations with graph multiset pooling* by Baeck et al., which can be retrieved from https://arxiv.org/abs/2102.11533.

In order to estimate the score for the edge attributes, a feedforward net may be used. Given an initial node and edge attributes as intermediate estimates, the model may iteratively transform their inputs across the convolutional, GCN layers. Thereby, the score for the node attributes may be approximated. The total score of the graph data may be defined by combining the score approximations for the node attributes and the edge attributes, and may serve as the output of the score-approximation model. In the attention module, or ATTN module, which may form a building block in the architecture, the node attributes and the edge attributes may be combined, so together with their mutual dependencies, and new sample graphs may be generated. The framework as above may optimize the modelling and further learning from the graph elements, by combining the node attributes and the edge attributes in the attention building block module. Existing diffusion models, such as GDSS, exploit an attention mechanism in which only node attributes and adjacency information are used together to infer the topology of a graph and associated distributions. The influence of edge attributes on graph generation is, again, overlooked in the framework of the attention modules in existing models.

In a further aspect of the invention, a method may be provided for using a trained diffusion model to generate graph data based on samples from a normal distribution as input. The diffusion model and the graph data may be according to an embodiment.

The method may comprise providing a trained diffusion model, as trained by the training method according to an embodiment. The method may further comprise feeding samples from a normal distribution as input into the trained diffusion model. The method may further comprise repeatedly performing the reverse-time pass of the diffusion process to obtain graph data. The method may further comprise outputting the graph data. New graphs may be sampled.

In an embodiment, the method may further comprise using the graph data as training data for training a further machine learning model. For example, such a further machine learning model may comprise a prediction model, such as a trajectory prediction model, for example a driving scene prediction model. For example, such a prediction model may be applied in autonomous, self-driving vehicles. In an embodiment, the method may further comprise generating the graph data for the training of the further machine learning model by sampling from a target distribution to obtain samples which represent edge cases according to the target distribution and by feeding the samples as input into the trained diffusion model to obtain said graph data. The edge cases according to the target distribution may comprise situations which according to the target distribution occur with low probability. The edge cases may occur with a probability of less than 10%, for example less than 5%, for example less than 1%, for example less than 0.5%, for example less than 0.1 %, for example less than 0.01 %, for example less than 0.001 %. For example, in the case of the case of the autonomous, self-driving vehicle, such edge cases may represent collisions or near-collisions of such vehicles with other, self-driving or non-self-driving, vehicles, cyclists, and/or pedestrians. By sampling from a target distribution, samples may be obtained which represent such edge cases according to the target distribution. By feeding these samples as input into the diffusion model, data are obtained which may be used as training data for a machine learning model.

In a further aspect of the invention, a system is provided, which comprises one or more processors; and one or more storage devices storing instructions that, when executed by the one or more processors, cause the one or more processors to perform operations for a method according to an embodiment as discussed above.

In a further aspect of the invention, a transitory or non-transitory computer-readable medium is provided, which comprises data representing instructions, which when executed by a processor system, cause the processor system to perform one or more steps of the method according to an embodiment as discussed above.

It will be appreciated by those skilled in the art that two or more of the above-mentioned embodiments, implementations, and/or optional aspects of the invention may be combined in any way deemed useful.

Modifications and variations of any device, system, network, computer-implemented method and/or any computer readable medium, which correspond to the described modifications and variations of another of such entities, can be carried out by a person skilled in the art on the basis of the present description.

## Brief description of the drawings

Further details, aspects, and embodiments will be described, by way of example only, with reference to the drawings. Elements in the figures are illustrated for simplicity and clarity and have not necessarily been drawn to scale. In the figures, elements which correspond to elements already described may have the same reference numerals. In the drawings,

**Fig.** 1 shows machine learning diffusion model and a score-approximation model according to an embodiment;
**Fig.2** shows a method for training a machine learning diffusion model according to an embodiment;
**Fig.** 3 shows a method for using a trained machine learning diffusion model according to an embodiment;
**Fig.** 4 shows a block diagram of the architecture of a score-approximation model according to an embodiment;
**Fig. 5a** shows a computer-readable medium having a writable part comprising a computer program according to an embodiment; and
**Fig. 5b** shows a representation of a processor system according to an embodiment.

## Reference signs list

The following list of references and abbreviations is provided for facilitating the interpretation of the drawings and shall not be construed as limiting the claims.

1 Graph Convolutional Network (GCN)
2 Graph Multi-Head attention (GMH)
3 Graph Neural Module (GNM)
4 ATTentioN (ATTN) module
5 MultiLayer Perceptron (MLP) network
10 data distribution
11, 11.1, 11.2, 11.3 samples from a data distribution
12 graph data
12.1 node attributes
12.2 edge attributes
12.3 additional graph data
100 machine learning diffusion model
110, 110.1, 110.2, 110.3 one or more diffusion layers
120 score-approximation model
130, 130.1, 130.2, 130.3 one or more convolution layers
200 method for training a machine learning diffusion model
201 feeding samples from an initial data distribution as input into the diffusion model

202 diffusion process
202' joint diffusion process
202.1 forward-time pass
202.1' forward-time stochastic differential equation
202.2 reverse-time pass
202.2' reverse-time stochastic differential equation
203 providing the intermediate estimates of graph data as input to the score-approximation model
204 using a score-approximation model which is trained on the parameters of the one or more diffusion layers to obtain an approximated score of the diffusion process
205 training the score-approximation model to minimize an expectation value with respect to a score of a conditional probability distribution of the diffusion process which is conditional on the initial data distribution
206 using the approximated score of the diffusion process as the score term in the reverse-time stochastic differential equation
207 providing the trained diffusion model for use
300 method for using a trained diffusion model
301 providing a trained diffusion model
302 feeding samples from a data normal distribution as input into the trained diffusion model
303 repeatedly performing the reverse-time pass of the diffusion process to obtain graph data
304 outputting the graph data
305 using the graph data as training data for training a further machine learning model
306 generating the graph data for the training of the further machine learning model
1000 optical storage device
1001 memory card
1020, 1021 stored data
1110 subsystems or components
1120 processing subsystem
1122 memory
1124 dedicated integrated circuit
1126 communication interface
1130 interconnect
1140 processor system

**Detailed description of embodiments**

While the presently disclosed subject matter is susceptible of embodiment in many different forms, there are shown in the drawings and will herein be described in detail one or more specific embodiments, with the understanding that the present disclosure is to be considered as exemplary of the principles of the presently disclosed subject matter and not intended to limit it to the specific embodiments shown and described.

In the following, for the sake of understanding, elements of embodiments are described in operation. However, it will be apparent that the respective elements are arranged to perform the functions being described as performed by them.

Further, the subject matter that is presently disclosed is not limited to the embodiments only, but also includes every other combination of features described herein or recited in mutually different dependent claims.

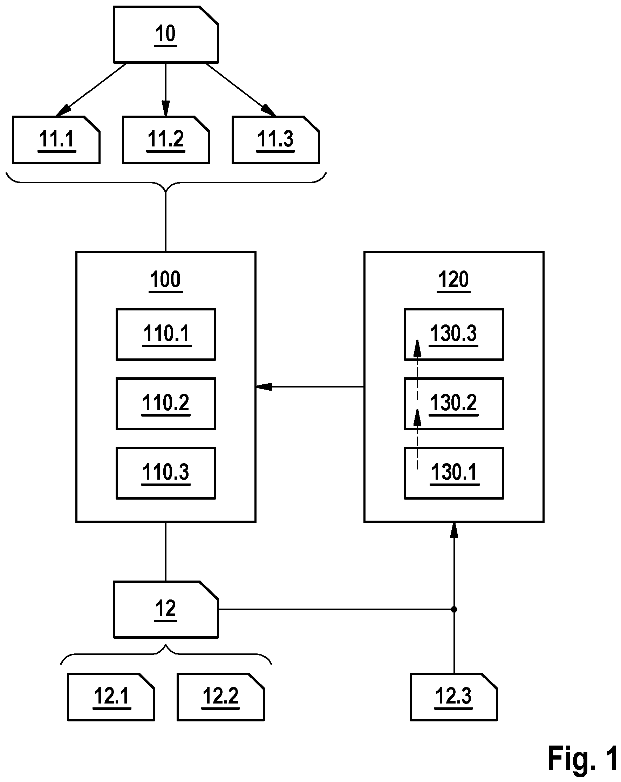

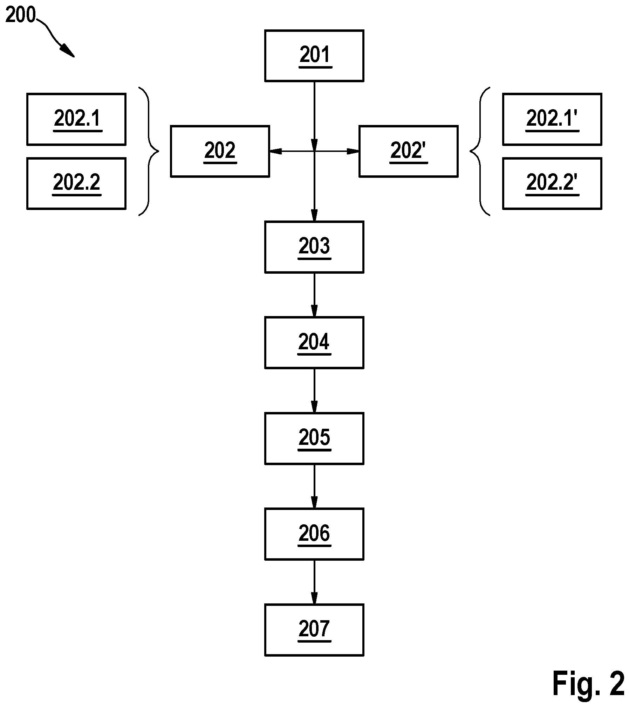

**Fig. 1** shows an example of a machine learning diffusion model 100 according to an embodiment, and **Fig. 2** shows an example of a method 200 for training a machine learning diffusion model 100 to generate graph data 12 based on samples 11 from a data distribution 10 as input, according to an embodiment. The following refers jointly to Figs. 1 and 2, in order to explain both the machine learning diffusion model and the method for the training of the machine learning diffusion model. In an optional step 201, samples 11.1, 11.2, 11.3 from an initial data distribution 10 may be fed as input into diffusion model 100. Diffusion model 100 may receive samples 11.1, 11.2, 11.3 from initial data distribution 10 as input. Diffusion model 100 may be able to generate graph data 12 based on samples 11.1, 11.2, 11.3 as input. Such graph data 12 may comprise node attributes 12.1 and edge attributes 12.2.

Diffusion model 100 may comprise one or more diffusion layers 110.1, 110.2, 110.3. Diffusion layers 110.1, 110.2, 110.3 may comprise parameters. A diffusion process 202 may be performed in the diffusion layers 110.1, 110.2, 110.3. Diffusion process may be performed to learn the parameters of diffusion layers 110.1, 110.2, 110.3, Diffusion process 202 may comprise a forward-time pass 202.1 and a reverse-time pass 202.2. Forward-time pass 202.1 may comprises noise-perturbing the data distribution 10. Reverse-time pass 202.2 may comprise denoising samples from a noise-perturbed data distribution.

Diffusion process 202 may be performed by performing a joint diffusion process 202'. Performing joint diffusion process 202' may comprise solving a forward-time stochastic differential equation 202.1' and a reverse-time stochastic differential equation 202.2'. Forward-time stochastic differential equation 202.1' and reverse-time stochastic differential equation 202.2' may each be based on both node attributes 12.1 and edge attributes 12.2. A formulation of reverse-time stochastic differential equation 202.2' may additionally be based on the learnt parameters of diffusion layers 110.1, 110.2, 110.3. Reverse-time stochastic differential equation 202.2' may comprises a score term. The score term may represent a score of diffusion process 202. Forward-time stochastic differential equation 202.1' and reverse-time stochastic differential equation 202.2' may be solved for both node attributes 12.1 and edge attributes 12.2 simultaneously. Node attributes 12.1 and edge attributes 12.2 may be the output of diffusion model 100. Diffusion process 202 may, optionally, be iteratively performed. In iteratively performing diffusion process 202, intermediate estimates of graph data 12 may be obtained. The intermediate estimates of graph data 12 may comprise intermediate estimates of node attributes 12.1 and edge attributes 12.2.

In an optional step 203, the intermediate estimates of graph data 12 may be provided as input to a score-approximation model 120. In an optional step 204, score-approximation model 120 may be used. In an optional step 205, score-approximation model 120 may be trained. Score-approximation model 120 may be trained on the parameters of diffusion layers 110.1, 110.2, 110.3. Score approximation model 120 may be trained to obtain an approximated score of diffusion process 202 which may be performed in the diffusion layers 110.1, 110.2, 110.3. Score-approximation model may be trained to minimize an expectation value with respect to a score of a conditional probability distribution of diffusion process 202 which may be conditional on the initial data distribution 10.Score-approximation model 120 may be configured to receive graph data 12 as input. Node attributes 12.1 and edge attributes 12.2 may be provided as input of score-approximation model 120. Diffusion process 202, which may be performed in diffusion layers 110.1, 110.2, 110.3, may be performed iteratively.

Hereby, intermediate estimates of graph data 12 may be obtained. The intermediate estimates of graph data 12 may comprise intermediate estimates of node attributes 12.1 and edge attributes 12.2.The intermediate estimates of graph data 12 may be provided as input to score-approximation model 120.

Score-approximation model 120 may comprise one or more convolution layers 130.1, 130.2, 130.3. Score-approximation model 120 may transform input, such as graph data 12 or intermediate estimates of graph data 12, across convolution layers 130.1, 130.2, 130.3. The transforming of the intermediate estimates of graph data 12 may comprise matrix and/or tensor multiplications. The matrix and/or tensor multiplications may combine both the intermediate estimates of node attributes 12.1 and the intermediate estimates of edge attributes 12.2. The matrix and/or tensor multiplications may further comprise additional graph data 12.3 as factors. Additional graph data may comprise model weights and/or additional adjacency information and/or degree information.

In an optional step 206, the approximated score of diffusion process 202 may be used as the score term in reverse-time stochastic differential equation 202.2'. In a step 207, trained diffusion model 100 may be provided for use.

In the above embodiments, we employ the mutual dependence of the node attributes 12.1 and the edge attributes 12.2. In order to properly model graph distributions, the node, edge, adjacency information as *well* as *their mutual interaction* would need to be encoded. The node attributes 12.1 and edge attributes 12.2 may generally be mutually dependent via, for example, the adjacency information of the network. Note that the edge attributes 12.2 may convey neighbourhood information of any node and its adjacent nodes and provide instrumental data this way, which data may be absent in the adjacency matrix. The mutual dependence of the node attributes 12.1 and the edge attributes 12.2 may differ per network type: for example, the graph data 12 of graphs showing a high level of connectivity are of a high degree of mutual dependence and therefore interdependence of the node attributes 12.1 and the edge attributes 12.2. The interaction between the node attributes 12.1 and the edge attributes 12.2 may be of importance to be modelled, and therefore be implemented in the modelling procedure. Whether this interaction may be negligible may depend per graph type, and may be hard to distinguish upfront. Therefore, it may generally be of importance to be able to model the interdependence between the node attributes 12.1 and the edge attributes 12.2.

Diffusion model 100 may be aimed at generating graph data 12 according to a graph data distribution 10. The graph data distribution 10 may be denoted $p_0$. A graph with $n$ nodes may be denoted as a 2-tuple $G = (X, E)$. Here, $X \in \mathbb{R}^{n \times u}$ may denote the node attributes 12.1 and $E \in \mathbb{R}^{n \times n \times v}$ may denote a tensor comprising the edge attributes 12.2. The corresponding adjacency matrix $A \in \{0,1\}^{n \times n}$ may be recovered from $E$ by

$$A = \sigma(\max_k |E_{ijk}|)$$

in other words, by taking the maximum over the last dimension of the absolute value of $E$, and passing the result through a sign function $\sigma$. As the adjacency information may be recovered from $E$, encoding $G = (X, E)$ may be sufficient to fully capture the underlying structure of the graph. The aim may be to generate new graphs according to the graph data distribution 10: $G \sim p_0$. This may be achieved by defining a diffusion process 202 from $p_0$ to a distribution $p_T$ for a certain time $T$ (and in reverse, by nature of a diffusion process 202). A diffusion process 202 may be defined by $\{G_t = (X_t, E_t)\}_{t=0}^T$ with $t \in [0, T]$, where $G_0$ may be sampled from the graph data distribution 10: $G_0 \sim p_0$, and $G_T$ may be sampled from $p_T$: $G_T \sim p_T$. Here, $p_T$ may denote a prior distribution, which may be a simple distribution, such as, for example, a normal Gaussian distribution. The forward-time part of joint diffusion processes 202' may be represented by solutions of stochastic differential equations 202.1', which may take the form

$$dG_t = f(G_t, t)\, dt + g\, dw$$

Here, the function $f(\cdot, t): \mathcal{G} \to \mathcal{G}$ may denote a drift transformation on a set of graphs $\mathcal{G}$, and $g \in \mathbb{R}$ may denote a diffusion scalar. Furthermore, w may denote a standard Wiener process. The expression $p_t(G_t)$ may denote the probability density of $G_t$, and $p_{st}(G_t | G_s)$ may denote the transition kernel from $G_s$ to $G_t$ for $s < t$. The above stochastic differential equation and the equivalent diffusion process may be generative, in the sense that samples may be drawn from $G_T \sim p_T$, as well as propagated backwards in a reverse-time process.

Reverse-time stochastic differential equation 202.2' may comprise a score term representing a score of the diffusion process 202. The following reverse-time stochastic differential equation 202.2' may represent the reverse part of the joint diffusion process 202':

$$dG_t = [f(G_t, t) - g^2 \nabla_{G_t} \log p_t(G_t)] d\bar{t} + g \; d\overline{w}$$

where $\overline{w}$ may denote a reverse-time Wiener process, and $d\bar{t}$ may denote an infinitesimal negative timestep. Here, $\nabla_{G_t} \log p_t(G_t)$ may denote the score term. Integrating the reverse-time stochastic differential equation 202.2' from time T to time 0 may allow to effectively sample new data points 12 from $p_0$.

Training method 200 may comprise using 204 a score-approximation model 120. The score-approximation model 120 may be a neural network, such as a graph neural network. The score-approximation model 120 may be a denoising neural network. The score-approximation model 120 may be trained on the parameters of the one or more diffusion layers 110. As estimating the score term in the reverse-time stochastic differential equation 202.2' may be non-trivial for all times save for $t = T$, the score-approximation model 120 may be trained to obtain an approximated score of the diffusion process 202.

Training method 200 may further comprise feeding 201 samples 11 from an initial data distribution 10 as input into the diffusion model 100. Initial data distribution 10 may be denoted by $p_0$, and the samples 11 may be denoted by $G_0 \sim p_0$. Training method 200 may further comprise training 205 score-approximation model 120 to minimize an expectation value with respect to a score of a conditional probability distribution of diffusion process 202 which is conditional on initial data distribution 10. The output of core-approximation model 120, which may be denoted by $s_\theta$, may minimize

$$\min_\theta \mathbb{E}_t \{ \lambda_t \mathbb{E}_* [ \big| s_\theta(G_t, t) - \nabla_{G_t} \log p_t(G_t | G_0) \big|^2 ] \}$$

Here, $G_t \sim p_{0t}(G_t | G_0)$, and the expectation value $\mathbb{E}_*$ is taken over both $G_0$ and $G_t | G_0$. Further, $\lambda_t$ may denote a positive weight function.

Training method 200 may further comprise using 206 the approximated score of the diffusion process 202 as the score term in the reverse-time stochastic differential equation 202.2'. Training method 200 may further comprise providing 207 the trained diffusion model for use.

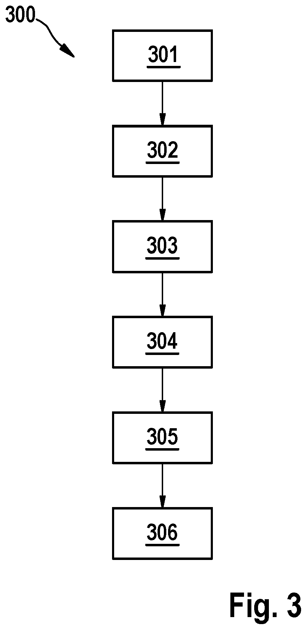

**Fig. 3** shows a method 300 for using a trained machine learning diffusion model 110 to generate graph data 12 based on samples 11 from a normal distribution 10 as input, according to an embodiment. In step 301, a trained diffusion model 110 may be provided. The trained diffusion model 110 may be trained according to the training method 200 according to any of the embodiments. The trained diffusion model 100 may comprise one or more diffusion layers 110. In step 302, samples 11 from a normal distribution 10 may be fed as input into the trained diffusion model 100. In step 303, the the reverse-time pass 202.2 of the diffusion process 202 which may be performed in the one or more diffusion layers may be repeatedly performed to obtain graph data 12. The graph data 12 may comprise node attributes 12.1 and edge attributes 12.2. In step 304, the graph data may be outputted.

In a possible step 305, the graph data 12 may be used as training data for training a further machine learning model. In a possible step 306, the graph data 12 may be generated for the training of the further machine learning model. The graph data 12 may be generated by sampling from a target distribution to obtain samples which represent edge cases according to the target distribution, and by feeding the samples as input into the trained diffusion model 100 to obtain said graph data 12. The further machine learning model may comprise a prediction model. The prediction model may, for example, comprise a trajectory prediction model. The trajectory prediction may, for example, comprise, a driving scene prediction model.

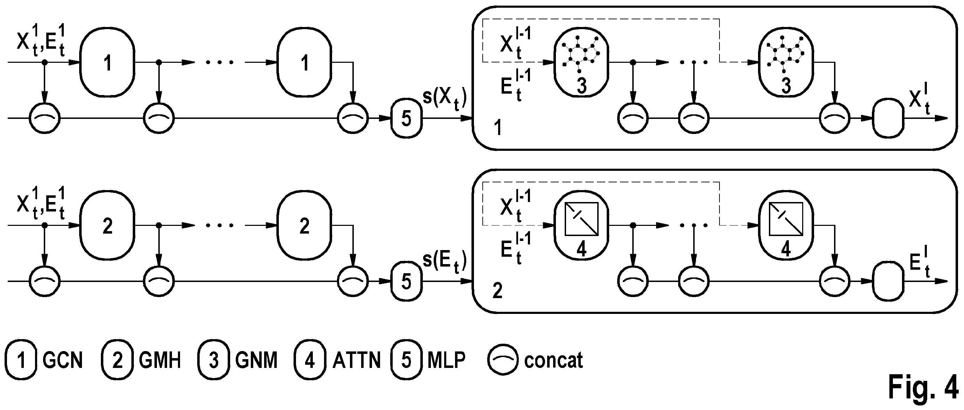

**Fig. 4** shows a block diagram of an example of an architecture of the score-approximation model 120. The score-approximation model 120 may be configured to receive graph data 12 as input. The training method 200 may comprise iteratively performing the diffusion process 202. Hereby, intermediate estimates of graph data 12 are obtained, wherein the intermediate estimates of graph data 12, which may be denoted by $G_t := (X_t, E_t)$, comprises intermediate estimates of node attributes 12.1, here denoted by $X_t$, and edge attributes 12.2, here denoted by $E_t$. The intermediate estimates of graph data 12 may be provided as input to the score-approximation model 120.

The score-approximation model 120 may comprise a graph network, for example a graph convolutional network (GCN), of which the elements are denoted by the blocks with a '1' in the block diagram. The GCN may comprise one or more convolution layers 130 for transforming the intermediate estimates of graph data 12 across the one or more convolution layers 130. In the figure, on the left-hand side two convolutional layers are explicitly shown, and on the right-hand side a zoomed-in convolutional layer is shown in more detail. The transforming of the intermediate estimates of graph data 12 across the convolutional layers may comprise the use of matrix and/or tensor multiplications, which combine both the intermediate estimates of node attributes $X_t$ and the intermediate estimates of edge attributes $E_t$. The matrix and/or tensor multiplications may further comprise additional graph data as factors, such as model weights and/or additional adjacency information and/or degree information. More specifically, the transforming of the intermediate estimates of graph data 12 across the convolutional layers 130 may take place in the following manner.

The layers of the GCN module, shown on the left in multiple instances and shown on the right in one instance in more detail, may comprise Graph Neural Module (GNM) layers, which are denoted by '3' in Fig. 4. In the GNM layers, where node, edge, and adjacency information may be combined together in the following way, capturing the interaction between the different graph elements and thereby affecting all other computations in the score-approximation model. Given an intermediate estimate of node and edge attributes, denoted by $X_t$ and $E_t$, respectively, the GNM module may be defined in functional form via

$$GNM(X_t, E_t) := \overline{A_t} X_t W_X + \sigma(B[\overline{A_t} \otimes E_t W_E])$$

Here, $\otimes$ may denote an element-wise matrix product, $W_X$, $W_E$ may denote neural network weights, $B[\cdot]$ sums over the second axis, and $\sigma$ may comprise the function *tanh,* the hyperbolic tangent. The matrix $\overline{A_t}$ denotes a scaled adjacency matrix, which is constructed by scaling the adjacency matrix $A_t$ with the degree matrix $D_t$: i.e.,

$$\overline{A_t} := D_t^{-1/2} \otimes A_t \otimes D_t^{-1/2}$$

Here, the adjacency matrix $A_t$ may be recovered from the intermediate estimates of the edge attributes $E_t$ by maximising over the third index of the absolute value of the edge attribute tensor $E_t$: i.e.,

$$A_t := sign(\max_k |E_{ijk}|)$$

where *sgn* denotes a sign function. Furthermore, the degree matrix $D_t$ is a diagonal matrix, which encodes the number of connecting edges for each node of the graph.

Furthermore, the graph neural network may comprise a multilayer perceptron (MLP) network, of which the layers are denoted by a '5' in Fig. 4. At these instances '5', a module $H$ may be defined as

$$H(\{h_j\}, J, M) := M(concat[h_j]_{j=1}^J)$$

In other words, $H$ may take a collection of vectors $\{h_j\}$ with $J$ elements, concatenate them via the function *concat*$[\cdot]$, and feed the result through the layers of the MLP network via a function M. The GCN may be given by

$$GCN(X_t, E_t) = H(\{GNM(X_t, E_t)_j\}, J, M_\varphi)$$

Now, in order to estimate the score for the node attributes, a feedforward net $F_X$ is used. Given an initial node and edge attributes, initially defined using the initial data input as $X_0^1 = X_0$ and $E_0^1 = E_0$, the model iteratively transforms their inputs across the GCN layers via

$$X_t^l := F_X^l(X_t^{l-1}, E_t^{l-1}) \equiv GCN(X_t^{l-1}, E_t^{l-1})$$

with *Xt* and $E_t^l$ denoting the node and edge attributes representing the output of the *l*th layer out of the *L* layers. The score for the node attributes is approximated by the computation

$$s_\theta(X_t, t) = H(\{X_t^l\}, L, M_{\theta_X})$$

The score-approximation model 120 may further comprise a graph multihead (GMH) module, of which the elements are denoted by the blocks with a '2' in the block diagram. The GMH may comprise one or more layers for transforming the intermediate estimates of graph data 12 across the one or more layers. In the figure, on the left-hand side two layers are explicitly shown, and on the right-hand side a zoomed-in layer is shown in more detail. The transforming of the intermediate estimates of graph data 12 across the layers may take place in the following manner. The layers of the GMH module, shown on the left in multiple instances and shown on the right in one instance in more detail, may comprise attention (ATTN) modules, which are denoted by '4' in Fig. 4. In the ATTN modules, where node, edge, and adjacency information may be combined together in the following way, capturing the interaction between the different graph elements and thereby affecting all other computations in the score-approximation model. Given an intermediate estimate of node and edge attributes, denoted by $X_t$ and $E_t$, respectively, the ATTN module may be defined in functional form via

$$ATTN(X_t, E_t) := avg(Q_t K_t^T / \sqrt{d_t})$$

Here, $Q_t := GNM_Q(X_t, E_t)$ and $K_t := GNM_K(X_t, E_t)$ denote outputs of the graph neural module relative to a query $Q$ and a key $K$ as parameters defining weights, which are both vectors in the attention, with $d_t$ denoting the attention dimension. For more information on the attention parameters, it is referred to *Accurate learning of graph representations with graph multiset pooling* by Baeck et al., which can be retrieved from https://arxiv.org/abs/2102.11533. The GMH may be given by

$$GMH(X_t, E_t) := H(\{ATTN(X_t, mE_t)_j\}, J, M_\phi)$$

Now, in order to estimate the score for the edge attributes, a feedforward net $F_E$ is used. Given an initial node and edge attributes, initially defined using the initial data input as $X_0^1 = X_0$ and $E_0^1 = E_0$, the model may iteratively transform their inputs across the GCN layers via

$$E_t^l := F_E^l\left(X_t^{l-1}, E_t^{l-1}\right) \equiv GMH(X_t^{l-1}, E_t^{l-1})$$

with $X_t^l$ and $E_t^l$ denoting the node and edge attributes representing the output of the $l^{th}$ layer out of the $L$ layers. The score for the node attributes may be approximated by the computation

$$s_\theta(E_t, t) = H\left(\{E_t^l\}, L, M_{\theta_E}\right)$$

Finally, the total score of the graph data may be defined by

$$s_\theta(G_t, t) = (s_\theta(X_t, t), s_\theta(E_t, t))$$

as the final output of the score-approximation model.

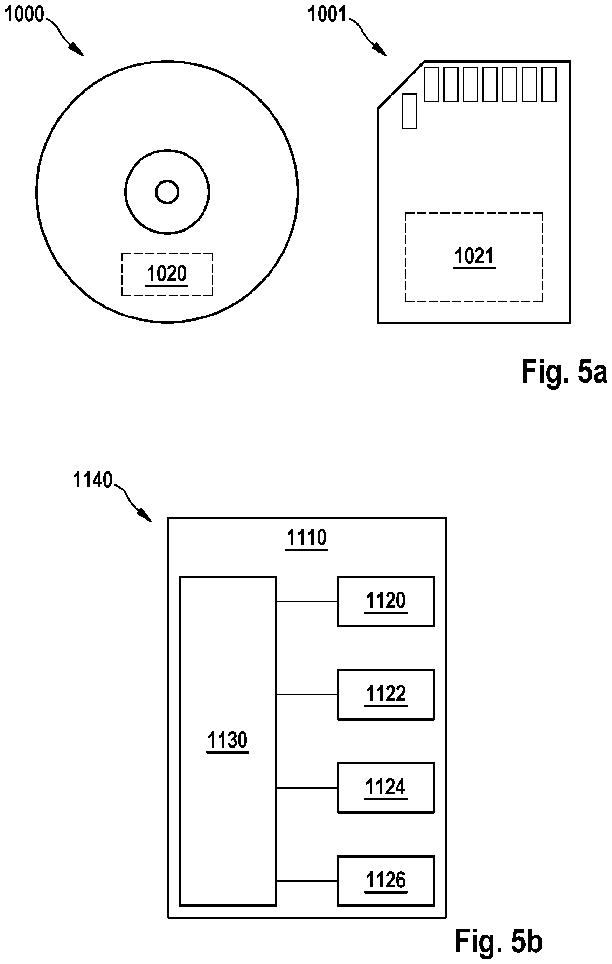

Any of the method(s) as described in this specification may be implemented on a computer as a computer implemented method, as dedicated hardware, or as a combination of both. As also illustrated in **Fig. 5a,** instructions for the computer, e.g., executable code, may be stored on a computer-readable medium 1000, 1001, e.g., in the form of a series 1020, 1021 of machine-readable physical marks and/or as a series of elements having different electrical, e.g., magnetic, or optical properties or values. The computer-readable medium 1000, 1001 may be a transitory or non-transitory medium. Examples of computer-readable mediums include memory devices, optical storage devices, integrated circuits, etc. By way of example, Fig. 5a shows an optical storage device 1000 and a memory card 1001.

**Fig. 5b** shows a processor system 1140 which may comprise or represent a system configured to perform a training and/or use method as described elsewhere in this specification. The processor system may comprise one or more subsystems or components 1110. For example, a processing subsystem 1120 may be provided for executing computer program components to perform a method as described elsewhere in this specification. A memory 1122 may be provided for storing programming code, data, etc. A communication subsystem 1126, such as a network interface, may allow communication with other entities. In some examples, a dedicated integrated circuit 1124 may be provided for performing part or all of the processing related to a method as described elsewhere in this specification. The processing subsystem 1120, the memory 1122, the dedicated IC 1124 and the communication subsystem 1126 may be connected to each other via an interconnect 1130, say a bus. While system 1140 is shown as including one of each described component, the various components may be duplicated in various embodiments. For example, the processing subsystem 1120 may include multiple microprocessors that are configured to independently execute a method as described in this specification or are configured to perform steps or subroutines of a method described herein such that the multiple processors cooperate to achieve the functionality described in this specification. Further, where the system 1140 may be implemented in a cloud computing system, a cloud server and/or a compute farm, the various hardware components may belong to separate physical systems. For example, the processing subsystem 1120 may include a first processor in a first server and a second processor in a second server.

In a first embodiment, the processor system 1140 may be configured to train a machine learning diffusion model 100; testing, verifying and/or validating a further machine learning model, and/or generating training data for such a training. Especially, processor system 1140 may be configured to generate test/verification/validation data to check whether a trained machine learning system, which may comprise a trained machine learning model 100, may be safely operated. The machine learning diffusion model 100 may be a generative model 100 to generate the training and/or test data 12, and/or a method 200 according to an embodiment may be a method 200 to train the generative model 100. After being trained in this way, the machine learning model 100 may be put to deployment of according to a use method 300 according to an embodiment.

In a second embodiment of Fig. 5b, the processor system 1140 may represent the hardware architecture and/or a system on which the trained machine learning model 100 may be deployed. Such a system may generate graph data 12. For example, such a system may be used to generate training data 12 for a further machine learning model. The system may also train the further machine learning model. For example, a prediction model, such as a trajectory prediction model, for example a driving scene prediction model, which may perform an application task as described elsewhere in this specification, may be deployed on the hardware architecture the processor system 1140 may represent. The generating graph data 12 may be used for the training of the further machine learning model by sampling from a target distribution 10 to obtain samples 11 which represent edge cases for the prediction model according to the target distribution 10 and by feeding the samples 11 as input into the trained diffusion model 100 to obtain said graph data 12. Alternatively, the machine learning model may be used to generate graph data for other purposes, such as the modelling of, e.g., molecules, relations on databases, information flows, such as communication networks, and other prediction and decision processes, such as Markovian decision processes.

It is noted that the first and second embodiments may also be combined, in that the processor system 1140 may be both configured to train the machine learning diffusion model 100 and to generate graph data 12 using the trained machine learning model. In some examples, the processor system 1140 may also generate the graph data 12 to obtain training data 12 for a further machine learning model. The system may also train the further machine learning model.

In another embodiment of Fig. 5b, the processor system 1140 may represent the hardware architecture and/or a system on which the further machine learning model 100 or the further machine learning model for which the generated graph data 12 may be used as training data may be deployed. The further machine learning model may receive graph data as input and generate an output, e.g., a classification or a regression output. The processor system 1140 may for example be a device or apparatus. The device or apparatus may comprise, for example, a sensor, which may determine measurements of the environment in the form of sensor signals, which may be given by, for example, digital images, e.g., video, radar, LiDAR, ultrasonic, motion thermal images, or audio signals. The graph data may be obtained from sensor data. The further machine learning model may be used and/or implemented in a device or apparatus. The output may be used to control an actuator. The device or apparatus may, for example, comprise an autonomous vehicle, which comprises a sensor which detects the presence of objects in the environment of the vehicle. An application task may comprise classifying the data from the sensor, detecting the presence of objects in the sensor data and/or performing a semantic segmentation on the data, e.g., regarding traffic signs, road surfaces, pedestrians and vehicles. Another application task may comprise determining a continuous value or multiple continuous values, e.g., perform a regression analysis, e.g., regarding a distance, a velocity, an acceleration, and/or the tracking of an item, e.g., an object, in the data. These examples of application tasks may be carried out on low-level features, such as edges or pixel attributes in the case of image data. Other application tasks may comprise detecting anomalies in technical systems, computing control signals for controlling technical systems, e.g., computer-controlled machines as robotic systems, vehicles, domestic appliances like a washing machine, power tools, manufacturing machines, personal assistants, or access control systems; or systems for conveying information, e.g., surveillance systems or medical systems as medical imaging systems.

It is noted that a presently disclosed method for training a machine learning diffusion model to generate graph data based on samples from a data distribution as input and a presently disclosed method for using a trained diffusion model to generate graph data based on samples from a normal distribution as input may be part of the same computer-implemented method.

Examples, embodiments or optional features, whether indicated as non-limiting or not, are not to be understood as limiting the invention as claimed.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or stages other than those stated in a claim. The article "a" or "an" preceding an element does not exclude the presence of a plurality of such elements. Expressions such as "at least one of" when preceding a list or group of elements represent a selection of all or of any subset of elements from the list or group. For example, the expression, "at least one of A, B, and C" should be understood as including only A, only B, only C, both A and B, both A and C, both B and C, or all of A, B, and C. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. A computer-implemented method (200) for training a machine learning diffusion model (100) to generate graph data (12) based on samples (11) from a data distribution (10) as input, the diffusion model (100) comprising one or more diffusion layers (110) and the graph data (12) comprising node attributes (12.1) and edge attributes (12.2),

    wherein the method (200) comprises using a diffusion process (202) to learn parameters of the one or more diffusion layers (110), wherein the diffusion process (202) comprises a forward-time pass (202.1) and a reverse-time pass (202.2) , wherein the forward-time pass (202.1) comprises noise-perturbing the data distribution (10) and the reverse-time pass (202.2) comprises denoising samples from a noise-perturbed data distribution,
    wherein the method (200) further comprises:

      - performing the diffusion process (202) by performing a joint diffusion process (202'), wherein performing the joint diffusion process (202') comprises solving a forward-time stochastic differential equation

(202.1') and a reverse-time stochastic differential equation (202.2'), wherein the forward-time stochastic differential equation (202.1') and the reverse-time stochastic differential equation (202.2') are each based on both the node attributes (12.1) and the edge attributes (12.2), wherein the reverse-time stochastic differential equation (202.2') is additionally based on the learnt parameters of the one or more diffusion layers (110),

wherein the forward-time stochastic differential equation (202.1') and the reverse-time stochastic differential equation (202.2') are solved for both the node attributes (12.1) and the edge attributes (12.2) simultaneously,

- providing (207) the trained diffusion model (100) for use.

2. A computer-implemented method (200) as in claim 1,

wherein the reverse-time stochastic differential equation (202.2') comprises a score term representing a score of the diffusion process (202), the method (200) further comprising:

- using (204) a score-approximation model (120) which is trained on the parameters of the one or more diffusion layers (110) to obtain an approximated score of the diffusion process (201), and
- using (206) the approximated score of the diffusion process (201) as the score term in the reverse-time stochastic differential equation (202.2').

3. A computer-implemented method (200) as in claim 2, wherein the method (200) further comprises:

- feeding (201) samples (11) from an initial data distribution (10) as input into the diffusion model (100),
- training (205) the score-approximation model (120) to minimize an expectation value with respect to a score of a conditional probability distribution of the diffusion process (202) which is conditional on the initial data distribution (10).

4. A computer-implemented method (200) as in any of claims 2 and 3, wherein the score-approximation model (120) is configured to receive graph data (12) as input, the method (200) further comprising:

- iteratively performing the diffusion process (202), thereby obtaining intermediate estimates of graph data (12), the intermediate estimates of graph data (12) comprising intermediate estimates of node attributes (12.1) and edge attributes (12.2),
- providing (203) the intermediate estimates of graph data (12) as input to the score-approximation model (120).

5. A computer-implemented method (200) as in claim 4, wherein the score-approximation model (120) comprises one or more convolution layers (130) for transforming the intermediate estimates of graph data (12) across the one or more convolution layers (130).

6. A computer-implemented method (200) as in claim 5, wherein the transforming of the intermediate estimates of graph data (12) comprises matrix and/or tensor multiplications combining both the intermediate estimates of node attributes (12.1) and the intermediate estimates of edge attributes (12.2).

7. A computer-implemented method (200) as in claim 6, wherein the matrix and/or tensor multiplications further comprise additional graph data (12.3) as factors, such as model weights and/or additional adjacency information and/or degree information.

8. A computer-implemented method (300) for using a trained diffusion model (100) to generate graph data (12) based on samples (11) from a normal distribution (10) as input, the diffusion model (100) comprising one or more diffusion layers (110) and the graph data (12) comprising node attributes (12.1) and edge attributes (12.2), wherein the method (300) comprises:

- providing (301) a trained diffusion model (100) as trained by the method (200) according to any one of claims 1 to 7,
- feeding (302) samples (11) from a normal distribution (10) as input into the trained diffusion model (100);
- repeatedly performing (303) the reverse-time pass (202.2) of the diffusion process (202) to obtain graph data (12);
- outputting (304) the graph data (12).

9. A computer-implemented method (300) as in claim 8, further comprising using (305) the graph data (12) as training data for training a further machine learning model.

10. A computer-implemented method (300) as in claim 9, further comprising generating (306) the graph data (12) for the training of the further machine learning model by sampling from a target distribution to obtain samples which represent edge cases according to the target distribution and by feeding the samples as input into the trained diffusion model (100) to obtain said graph data (12).

11. A computer-implemented method (300) as in claims 9 or 10, wherein the further machine learning model comprises a prediction model, such as a trajectory prediction model, for example a driving scene prediction model.

12. A computer-implemented method (200,300) as in any of the preceding claims, wherein the node attributes (12.1) comprise one or more of spatial coordinates, and/or the edge attributes (12.2) comprise one or more of spatial distances.

13. A computer-implemented method (200,300) as in any of the preceding claims, wherein the node attributes (12.1) comprise nodes on a grid, and the edge attributes (12.2) comprise probabilities of moving between the nodes on the grid.

14. A transitory or non-transitory computer-readable medium (1000) comprising data (1020,1021) representing a computer program, the computer program comprising instructions for causing a processor system (1140) to perform the method (200,300) according to any one of claims 1 to 13.

15. A processor system (1140) comprising a memory (1122) and one or more processors (1120), wherein the memory (1122) comprises instructions for causing the one or more processors (1120) to perform the method (200,300) according to any one of claims 1 to 13.

Fig. 1

200

```
         ┌──────┐
         │ 201  │
         └──────┘
             │
┌────────┐   │   ┌────────┐
│ 202.1  │┐  │  ┌│ 202.1' │
└────────┘│┌────┐│└────────┘
          ├│202 │◄──►│202'│├
┌────────┐│└────┘    └────┘│┌────────┐
│ 202.2  │┘  │            └│ 202.2' │
└────────┘   │             └────────┘
             ▼
         ┌──────┐
         │ 203  │
         └──────┘
             │
             ▼
         ┌──────┐
         │ 204  │
         └──────┘
             │
             ▼
         ┌──────┐
         │ 205  │
         └──────┘
             │
             ▼
         ┌──────┐
         │ 206  │
         └──────┘
             │
             ▼
         ┌──────┐
         │ 207  │
         └──────┘
```

Fig. 2

300

301

302

303

304

305

306

Fig. 3

Fig. 4

$X_t^1, E_t^1$

$s(X_t)$

$X_t^{l-1}$

$E_t^{l-1}$

$X_t^l$

$X_t^1, E_t^1$

$s(E_t)$

$X_t^{l-1}$

$E_t^{l-1}$

$E_t^l$

① GCN  ② GMH  ③ GNM  ④ ATTN  ⑤ MLP  ⌣ concat

EP 4 607 408 A1

1000

1020

1001

1021

**Fig. 5a**

1140

1110

1130

1120

1122

1124

1126

**Fig. 5b**

Europäisches Patentamt
European Patent Office
Office européen des brevets

## EUROPEAN SEARCH REPORT

**Application Number**

EP 24 15 9578

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JAEHYEONG JO ET AL: "Score-based Generative Modeling of Graphs via the System of Stochastic Differential Equations", ARXIV.ORG, CORNELL UNIVERSITY LIBRARY, 201 OLIN LIBRARY CORNELL UNIVERSITY ITHACA, NY 14853, 15 June 2022 (2022-06-15), XP091247252, * abstract; figure 1 * * page 3, left-hand column, last paragraph * * page 4, right-hand column, paragraph 5 - paragraph 6 * * page 3, right-hand column, paragraph 2 - page 4, left-hand column, paragraph 3 * * page 4, left-hand column, paragraph 4 * * page 4, right-hand column, paragraph 5 - page 5, right-hand column, last paragraph * * page 6, right-hand column, paragraph 3 - paragraph 5 * * page 2, left-hand column, last paragraph - page 3, left-hand column, paragraph 1 * ----- | 1-15 | INV. G06N3/042 G06N3/0464 G06N3/0475 |
| A | WENQI FAN ET AL: "Generative Diffusion Models on Graphs: Methods and Applications", ARXIV.ORG, CORNELL UNIVERSITY LIBRARY, 201 OLIN LIBRARY CORNELL UNIVERSITY ITHACA, NY 14853, 6 February 2023 (2023-02-06), XP091429673, * page 4, right-hand column, paragraph 2 - page 5, left-hand column, paragraph 2; figure 1 * ----- | 1-15 | |

**TECHNICAL FIELDS SEARCHED (IPC)**

G06N

The present search report has been drawn up for all claims

| Place of search | Date of completion of the search | Examiner |
|---|---|---|
| Munich | 1 August 2024 | Herri, Edmond |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)